(19) Europäisches Patentamt
European Patent Office
Office européen des brevets

(11) **EP 4 456 503 A1**

(12) **EUROPEAN PATENT APPLICATION**

(43) Date of publication:
**30.10.2024 Bulletin 2024/44**

(21) Application number: **23170802.5**

(22) Date of filing: **28.04.2023**

(51) International Patent Classification (IPC):
**H04L 45/16** (2022.01)    **H04L 47/56** (2022.01)

(52) Cooperative Patent Classification (CPC):
**H04L 45/16; H04L 47/56; H04L 47/568**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Nokia Solutions and Networks Oy
02610 Espoo (FI)**

(72) Inventor: **Tsiaflakis, Paschalis
2223 Heist-op-den-Berg (BE)**

(74) Representative: **IP HILLS NV
Bellevue 5/501
9050 Gent-Ledeberg (BE)**

(54) **OPTIMAL BALANCING OF LATENCY AND BANDWIDTH EFFICIENCY**

(57) Example embodiments describe a central network node configured to communicate in a point-to-multipoint network (100) with client network nodes (130, 140, 150); wherein the client network nodes respectively comprise one or more transmission queues (131, 132, 141, 151, 152, 153); wherein a respective transmission queue (141) has a recurrent transmission opportunity (142, 143, 144) for transmitting data (216, 217) from the respective transmission queue to the central network node; and wherein the recurrent transmission opportunity has a configurable interval (145, 218) and a configurable length. The central network node comprising means configured to perform, for the respective transmission queues: obtaining (201) an average ingress interval (202) of packets (211, 215) arriving at the transmission queue; and matching (203) the configurable interval (218) with the average ingress interval.

Fig. 2

**EP 4 456 503 A1**

**Description**

**Field of the Invention**

Various example embodiments relate to an apparatus and a method for dynamic bandwidth assignment in a communication network.

**Background of the Invention**

Dynamic bandwidth assignment, DBA, is a functionality in communication networks that dynamically allocates transmission opportunities to client network nodes. During these transmission opportunities, data may be transmitted from the associated client network node to another network node, e.g. a central network node. The transmission opportunities can be recurrent, and can be characterized by a configurable length and a configurable interval between the start of consecutive transmission opportunities. An operator typically provisions one or more service parameters for a traffic flow that ensures the quality of service by imposing constraints on the assigned bandwidth and the latency.

In DBA, the bandwidth or data rate of a traffic flow is typically determined based on the current activity of the client network node and the bandwidth-related service parameters, e.g. maximum bandwidth. Hereafter, the configurable length and configurable interval of the recurrent transmission opportunities are typically determined based on the assigned bandwidth and the latency-related service parameters. This is sometimes referred to as bandwidth factoring.

A small configurable interval typically results in a small latency but a substantial overhead, i.e. low bandwidth efficiency, due to the transmission of headers in each transmission opportunity. Vice-versa, a large configurable interval typically results in a low overhead, i.e. high bandwidth efficiency, but an excessive latency. In other words, a trade-off exists between latency and bandwidth-efficiency when determining the configurable interval and configurable length of recurrent transmission opportunities for an assigned bandwidth.

**Summary of the Invention**

The scope of protection sought for various embodiments of the invention is set out by the independent claims. The embodiments and features described in this specification that do not fall within the scope of the independent claims, if any, are to be interpreted as examples useful for understanding various embodiments of the invention.

Amongst others, it is an object of embodiments of the invention to optimize the trade-off between latency and bandwidth efficiency of traffic flows between a client network node and a central network node.

This object is achieved, according to a first example aspect of the present disclosure, by a central network node configured to communicate in a point-to-multipoint network with client network nodes. The client network nodes respectively comprise one or more transmission queues. A respective transmission queue has a recurrent transmission opportunity for transmitting data from the respective transmission queue to the central network node. The recurrent transmission opportunity has a configurable interval and a configurable length. The central network node comprising means configured to perform, for the respective transmission queues: obtaining an average ingress interval of packets arriving at the transmission queue; and matching the configurable interval with the average ingress interval.

A respective transmission queue is thus allowed to transmit data to the central network node during a dedicated transmission opportunity that recurs in time, i.e. during a repeating timeslot. The configurable interval of the recurrent transmission opportunity is a time interval between the start of consecutive transmission opportunities associated with the same transmission queue. The configurable length of the recurrent transmission opportunity is a duration in time of the transmission opportunity. In between consecutive transmission opportunities associated with a certain transmission queue, one or more non-overlapping recurrent transmission opportunities associated with different transmission queues may be allocated.

A transmission queue receives data packets from a connected service or application at a certain rate or frequency. The average ingress interval of packets arriving at the transmission queue is indicative for the average interarrival time of consecutive data packets at the transmission queue. Data packets within a transmission queue await their turn to be transmitted to the central network node during the allocated recurrent transmission opportunity.

Matching the configurable interval with this average ingress interval results in an optimization of the trade-off between bandwidth efficiency and latency of the traffic flow for a respective transmission queue. In other words, configuring the average ingress interval of a transmission queue as the configurable interval of the recurrent transmission opportunities associated with that transmission queue results in an optimal balance of the bandwidth efficiency and the latency.

This allows active and adaptive tracking of an optimized configuration for the configurable interval over time, as a larger configurable interval is configured when the service associated with a transmission queue does not require low latency, and a smaller configurable interval is configured when the connected service requires low latency. In other words, this allows aligning the allocation of recurrent transmission opportunities with the instantaneous latency requirements of the active traffic in a transmission queue.

This has the further advantage that the configurable interval can be dynamically adapted to the current traffic between a client node and the central network node. This has the further advantage that an optimal balance between bandwidth efficiency and latency can be maintained when the services connected to a transmission queue vary over time, e.g. desired latency and jitter may vary substantially during the day for certain applications. This has the further advantage that the quality of service can be optimized and maintained. It is a further advantage that an incorrect, suboptimal, or conservative configuration of latency-related service parameters provisioned by an operator do not result in bandwidth inefficient operation or excessive latency.

According to an example embodiment, the central network node may be an optical line terminal, OLT, configured to communicate in a point-to-multipoint passive optical network with optical network units, ONUs.

The one or more transmission queues within the respective ONUs may be transmission containers, also referred to as T-CONT, which are ONU objects representing a group of logical connections within an ONU that appear as a single entity for the purpose of upstream bandwidth assignment in a passive optical network, PON. The recurrent transmission opportunities for transmitting data from the respective transmission queues to the OLT may be timeslots or bursts. The configurable interval and the configurable length of a transmission opportunity may further respectively be referred to as grant period and grant size in the context of PONs.

According to an example embodiment, the means may further be configured to perform, for the respective transmission queues, determining the configurable length of the recurrent transmission opportunities based on the configurable interval and a data rate of the transmitted data within the recurrent transmission opportunities.

The data rate or assigned bandwidth of the transmitted data within the recurrent transmission opportunities may be determined by a dynamic bandwidth assignment, DBA, algorithm performed by a DBA engine. Alternatively, the data rate can be provisioned by an operator. The configurable length of the recurrent transmission opportunities may then be determined based on the optimal configurable interval, i.e. matching the average ingress interval, and the assigned bandwidth or data rate.

According to an example embodiment, the means may further be configured to perform, for the respective transmission queues, determining periods of low power operation for the central network node and/or the client network node associated with a respective transmission queue, based on the configurable interval and the configurable length of the recurrent transmission opportunities.

A period between the end of a previous transmission opportunity and the start of a next transmission opportunity associated with a transmission queue may be substantially free of traffic originating from the transmission queue as data transmission to the central network node is only allowed during a recurrent transmission opportunity. As such, at least a portion of the client network node may operate in a low power mode during this period between transmission opportunities. This period can be determined based on the configurable length and the configurable interval of the recurrent transmission opportunities.

The means may further be configured to perform, for the respective transmission queues, instructing the client network node to switch one or more functionalities to a low power mode during the determined periods of low power operation. The client network node can, for example, be instructed to switch one or more transmitter circuitries to a sleep mode during the period of low power operation. This allows reducing the energy consumption of the client network nodes, thereby improving the energy efficiency of the client network node. Matching the configurable interval with the average ingress interval can thus result in an optimal balance of energy efficiency and latency in addition to an optimal balance of bandwidth efficiency and latency.

Alternatively or complementary, at least a portion of the central network node may operate in a low power mode during a period free of transmission opportunities, i.e. when none of the client network nodes are allowed to transmit data. To this end, the means may further be configured to switch one or more functionalities of the central network node to a low power mode during a determined period of low power operation for the central network node, e.g. by switching one or more receiver circuitries in the central network node to a sleep mode.

According to an example embodiment, obtaining the average ingress interval may comprise receiving the average ingress interval from a respective transmission queue or client network node.

In other words, the average ingress interval of packets arriving at a respective transmission queue may be determined by the client network node that comprises the respective transmission queue. This can be achieved by tracking or measuring the time interval between the arrival of consecutive packets at the transmission queue and updating an average of this time interval. The average ingress interval may then be exchanged with the central network node.

According to an example embodiment, the average ingress interval may be included in a header of the transmitted data from the respective transmission queue to the central network node.

The transmitted data may comprise a header, a payload, and idle data. The average ingress interval may, for example, be included in a dedicated frame, field, or bit of the header. Alternatively, the average ingress interval may be included in a standardized frame for buffer status reporting such as, for example, an upstream dynamic bandwidth report, DBRu, structure in a passive optical network according to the ITU-T G.9807 standard.

According to an example embodiment, obtaining the average ingress interval may comprise determining the average ingress interval based on the transmitted data from a respective transmission queue to the central network node.

In other words, the means of the central network node may be configured to determine the average ingress interval of packets arriving at a transmission queue within a client network node based on the traffic received from said transmission queue.

According to an example embodiment, the transmitted data may comprise a queue status indicative for an occupancy of the respective transmission queue; and wherein determining the average ingress interval is based on the queue status.

The queue status may, for example, be a queue fill, a queue size, a queue length, a queue backlog, or an amount of packets within the transmission queue. The queue status may be included in a standardized frame of the transmitted data for buffer status reporting such as, for example, an upstream dynamic bandwidth report, DBRu, structure in a passive optical network according to the ITU-T G.9807 standard.

According to an example embodiment, determining the average ingress interval is based on idle data transmitted within the recurrent transmission opportunities.

A recurrent transmission opportunity may include idle data, i.e. data which carries no information. The average ingress interval may thus be determined based on the activity of the transmission queue as reflected by the idle data within the recurrent transmission opportunities, i.e. based on how previously allocated recurrent transmission opportunities are used. For example, idle XGEM frames within an upstream recurrent transmission opportunity in a passive optical network can be used to determine the average ingress interval.

According to an example embodiment, matching the configurable interval with the average ingress interval may comprise updating the configurable interval based on packets arriving at the transmission queue between consecutive transmission opportunities.

In other words, the configurable interval may be controlled to gradually converge to the average ingress interval by means of a closed-loop control. This can be achieved for a respective transmission queue based on a reported queue status, based on idle transmitted data, and/or based on transmitted data from the respective transmission queue.

According to an example embodiment, updating the configurable interval may be performed by means of a multiplicative weight update algorithm; a least mean squares, LMS, algorithm; a proportional-integral-derivative, PID, control algorithm; or a machine learning algorithm.

According to an example embodiment, the central network node may further be configured to receive a calibration data sequence from a respective transmission queue; and wherein the means are further configured to perform determining the average ingress interval based on the respective calibration data.

In other words, the average ingress interval of a transmission queue may be determined based on a calibration data sequence received from the transmission queue. The transmission queue may be prompted or requested to occasionally transmit the calibration data sequence to the central network node for determining the average ingress interval. This prompt or request may be performed periodically, at random intervals, at initialization, or when a threshold condition is reached. The calibration data sequence may, for example, be achieved by transmitting data from the transmission queue to the central network node with a substantially small configurable interval during a relatively short calibration period.

According to an example embodiment, matching the configurable interval with the average ingress interval may comprise converging the configurable interval to the average ingress interval starting from a lower limit of the configurable interval.

In other words, the matching is initiated by configuring the lower limit or lowest allowed configurable interval for the associated service or application. This allows guaranteeing the latency quality of service, in particular at startup of latency sensitive services.

According to a second example aspect, a client network node is disclosed configured to communicate in a point-to-multipoint network with a central network node according to example embodiments of the first aspect. The client network node comprises one or more transmission queues; wherein a respective transmission queue has a recurrent transmission opportunity for transmitting data from the respective transmission queue to the central network node; and wherein the recurrent transmission opportunity has a configurable interval and a configurable length. The client network node comprising means configured to perform, for the respective transmission queues: determining an average ingress interval of packets arriving at the transmission queue; and providing the average ingress interval to the central network node.

According to a third example aspect, a method is disclosed comprising obtaining, by a central network node, an average ingress interval of packets arriving at a transmission queue included in a client network node; wherein the central network node is configured to communicate in a point-to-multipoint network with client network nodes; wherein the client network nodes respectively comprise one or more transmission queues; wherein a respective transmission queue has a recurrent transmission opportunity for transmitting data from the respective transmission queue to the central network node; and wherein the recurrent transmission opportunity has a configurable interval and a configurable length. The method further comprising matching the configurable interval with the average ingress interval.

According to a fourth example aspect, a computer-implemented method is disclosed comprising obtaining, by a central network node, an average ingress interval of packets arriving at a transmission queue included in a client network node; wherein the central network node is configured to communicate in a point-to-multipoint network with client network nodes; wherein the client network nodes respectively comprise one or more transmission queues; wherein a respective transmission queue has a recurrent transmission opportunity for transmitting data from the respective transmission queue to the central network node; and wherein the recurrent transmission opportunity has a configurable interval and a configurable length. The computer-implemented method further comprising matching the configurable interval with the average ingress interval.

According to a fifth example aspect, a computer program product is disclosed comprising computer-executable instructions for performing the steps according to the fourth example aspect when the computer program is run on a computer.

According to a sixth example aspect, a data processing system is disclosed configured to perform the computer-implemented method according to the fourth aspect.

**Brief Description of the Drawings**

Fig. 1 shows a schematic block diagram of an example point-to-multipoint network;

Fig. 2 shows steps performed by means of a central network node configured to optimize the balance between latency and bandwidth efficiency of traffic flows between a client network node and a central network node, according to an example embodiment;

Fig. 3A shows validation results of the latency and bandwidth efficiency of a periodic traffic flow between a client node and a central network node for different configurable intervals;

Fig. 3B shows validation results of the latency and bandwidth efficiency of a modelled traffic flow between a client node and a central network node for different configurable intervals;

Fig. 4A shows validation results of a torrent traffic flow;

Fig. 4B shows validation results of a modelled traffic flow and a traffic flow for a full HD video stream;

Fig. 5 shows an example embodiment of a central network node and a client network node according to embodiments;

Fig. 6A illustrates the performance of an example embodiment for matching the configurable interval with the average ingress interval for a modelled traffic flow;

Fig. 6B illustrates the performance of an example embodiment for matching the configurable interval with the average ingress interval for a torrent traffic flow;

Fig. 6C illustrates the performance of an example embodiment for matching the configurable interval with the average ingress interval for a traffic flow associated with uploading a large file;

Fig. 6D illustrates the performance of an example embodiment for matching the configurable interval with the average ingress interval for a torrent traffic flow; and

Fig. 7 shows a suitable computing system enabling to implement embodiments of the method for optimizing the trade-off between latency and bandwidth efficiency of traffic flows.

**Detailed Description of Embodiment(s)**

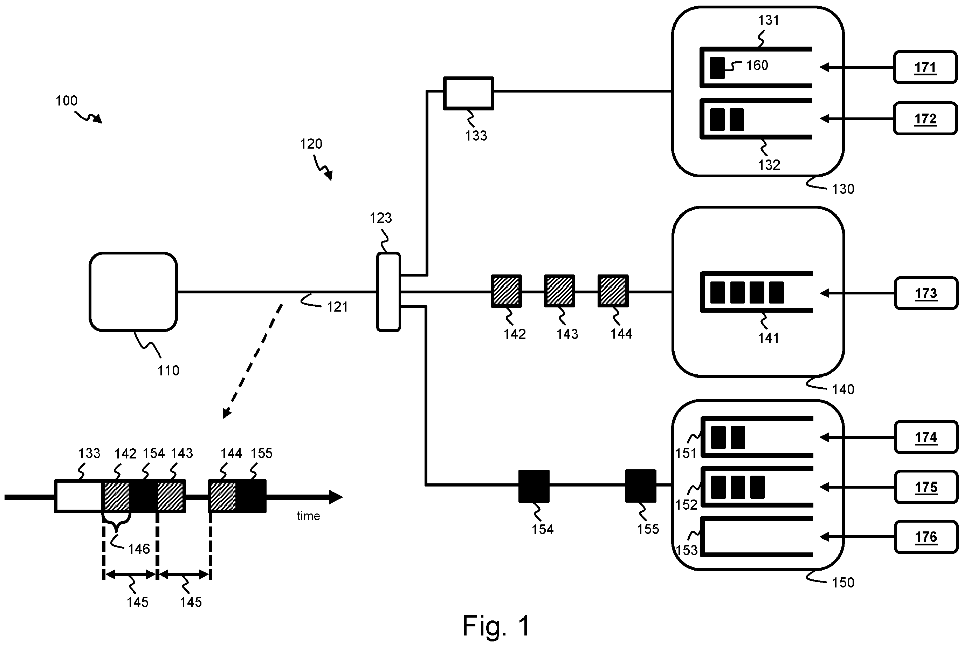

Fig. 1 shows a schematic block diagram of an example point-to-multipoint network 100. The network comprises a central network node 110 and a plurality of client network nodes 130, 140, 150. In this example, the central network node is connected to three client network nodes 130, 140, 150, however, the central network node 110 may be connected to fewer or more nodes. The client network nodes 130, 140, 150 share a telecommunication medium 121, e.g. a network cable or a fibre, for exchanging data with the central network node 110. The respective client network nodes 130, 140, 150 comprise one or more transmission queues 131, 132, 141, 151, 152, 153 where data packets 160 originating from a connected service 171 - 176 or application await their turn to be transmitted to the central network node 110.

Time-division multiplexing, TDM, may be implemented to share the telecommunication medium 121 in time between the client network nodes 130, 140, 150 in the upstream. To this end, recurrent transmission opportunities 133, 142, 143, 144, 154, 155 are allocated to the respective client network nodes 130, 140, 150 during which the respective client network nodes 130, 140, 150 are allowed to transmit data to the central network node 110. For example, client network node 140 is allowed to transmit upstream data during the recurrent transmission opportunities 142, 143, 144. The recurrent transmission opportunities 133, 142, 143, 144, 154, 155 may be allocated by dynamic bandwidth assignment, DBA, sometimes also referred to as dynamic bandwidth allocation. To this end, the central network node 110 may comprise a DBA engine.

The transmitted data during a recurrent transmission opportunity 133, 142, 143, 144, 154, 155 may thus originate from transmission queues 131, 132, 141, 151, 152, 153 within the associated client network nodes 130, 140, 150. A respective transmission queue 131, 141, 151 is allowed to transmit data to the central network node 110 during a dedicated transmission opportunity 133, 142, 143, 144, 154, 155 that recurs in time, i.e. during a repeating timeslot. A transmission opportunity 142, 143, 144 for a certain transmission queue 141 occurs at configurable intervals 145 and is characterized by a configurable length or size 146. The configurable interval 145 of a recurrent transmission opportunity is a time interval between the start of consecutive transmission opportunities 142, 143, 144 associated with the same transmission queue 141. The configurable length 146 of a recurrent transmission opportunity is a duration in time of the transmission opportunity. In between consecutive transmission opportunities associated with a certain transmission queue, e.g. 154 and 155, one or more non-overlapping recurrent transmission opportunities associated with different transmission queues may be allocated, e.g. 143 and 144.

Transmission opportunities associated with different transmission queues within the same client network node, e.g. transmission queues 131 and 132, may occur subsequently (not shown in Fig. 1), i.e. may follow each other in time. This can allow to only transmit one preamble for those subsequent transmission opportunities. For example, an upstream burst in a passive optical network, PON, may include a single preamble for one or more recurrent transmission opportunities associated with different transmission queues within the same optical network unit, ONU. It will be apparent that the transmission opportunities 133, 142, 143, 144, 154, 155 shown in Fig. 1 are associated with a single transmission queue in the respective client network nodes 130, 140, 150.

The configurable interval 145 of the transmission opportunities, the configurable length 146 of the transmission opportunities, and the assigned bandwidth or data rate typically define the latency and bandwidth efficiency of the traffic flow between a client network node 130, 140, 150 and the central network node 110. The assigned bandwidth is typically fixed, e.g. provisioned by an operator, or is determined by dynamic bandwidth assignment. The configurable interval 145 is typically determined based on some service parameters that ensure the quality of service of a traffic flow by imposing constraints on the assigned bandwidth and the latency, e.g. a latency-related service parameter that determines a maximum interval 145 between consecutive transmission opportunities. Service parameters are typically provisioned by an operator. Service parameters are sometimes also referred to as a traffic descriptor.

It is a problem that such service parameters may be configured incorrectly, too conservatively, or sub-optimally as an operator typically has limited understanding of the optimal value of a service parameter for the connected service 171 - 176 or application. Moreover, the latency requirements of the connected service 171 - 176 or application can vary substantially in time while the service parameters are typically fixed in time. This has the problem that the determined configurable interval 145 typically results in inefficient or sub-optimal operation, thereby affecting quality of service. Configuring a relatively small interval 145 results in a small latency but a substantial overhead, i.e. low bandwidth efficiency, due to the transmission of headers in each transmission opportunity 133, 142, 143, 144, 154, 155. Vice-versa, configuring a relatively large interval 145 results in a low overhead, i.e. high bandwidth efficiency, but an excessive latency.

It is thus desirable to determine a configurable interval 145 between transmission opportunities 133, 142, 143, 144, 154, 155 that results in an optimal balance or trade-off between latency and bandwidth-efficiency for the connected service 171 - 176 or application. It is further desirable to adapt or update the determined interval 145 in time according to the active traffic associated with the connected service or application 171 - 176.

According to an example embodiment, the point-to-multipoint network 100 may be a passive optical network, PON, wherein the central network node 110 is an optical line terminal, OLT, and the client network nodes 130, 140, 150 are optical network units, ONUs, connected via an optical distribution network, ODN 120. The ODN 120 may have a tree structure comprising an optical feeder fibre 121, one or more passive optical splitters/multiplexors 123, and a plurality of optical distribution fibres or drop fibres that connect the splitter/multiplexor 123 to the respective ONUs 130, 140, 150. In the downstream, the passive optical splitter/multiplexor 123 splits an optical signal coming from the OLT 110 into lower power optical signals for the connected ONUs 130, 140, 150, while in the upstream direction, the passive optical splitter/multiplexor 123 multiplexes the optical signals coming from the connected ONUs 130, 140, 150 into a burst signal for the OLT 110.

The one or more transmission queues 131, 132, 141, 151, 152, 153 within the respective ONUs 130, 140, 150 may be transmission containers, also referred to as T-CONT. Transmission containers are ONU-objects that represent a group of logical connections within an ONU 130, 140, 150 that appear as a single entity for the purpose of upstream bandwidth assignment in a passive optical network. The recurrent transmission opportunities 133, 142, 143, 144, 154, 155 for transmitting data from the respective transmission queues 131, 132, 141, 151, 152, 153 to the OLT 110 may be timeslots or bursts. The interval 145 and the length 146 of a transmission opportunity may further be referred to as grant period and grant size in the context of PONs, respectively. The interval 145 can typically also be characterized by a grant rate in the context of PONs, which is inversely proportional to the grant rate. In other words, the grant rate refers to a number of transmission opportunities within a time interval.

The passive optical network 100 may be a Gigabit passive optical network, GPON, according to the ITU-T G.984 standard, a 10x Gigabit passive optical network, 10G-PON, according to the ITU-T G.987 standard, a 10G symmetrical XGS-PON according to the ITU-T G.9807 standard, a four-channel 10G symmetrical NG-PON2 according to the ITU-T G.989 standard, a 25GS-PON, a 50G-PON according to the ITU-T G.9804 standard, or a next generation passive optical network, NG-PON. The passive optical network 100 may implement time-division multiplexing, TDM, or time- and wavelength-division multiplexing, TWDM.

Alternatively, the point-to-multipoint network 100 may be a wireless communication network, a cellular communication network, a satellite communication network, or a wireline communication network such as, for example, LTE, 5G, DOCSIS or DSL.

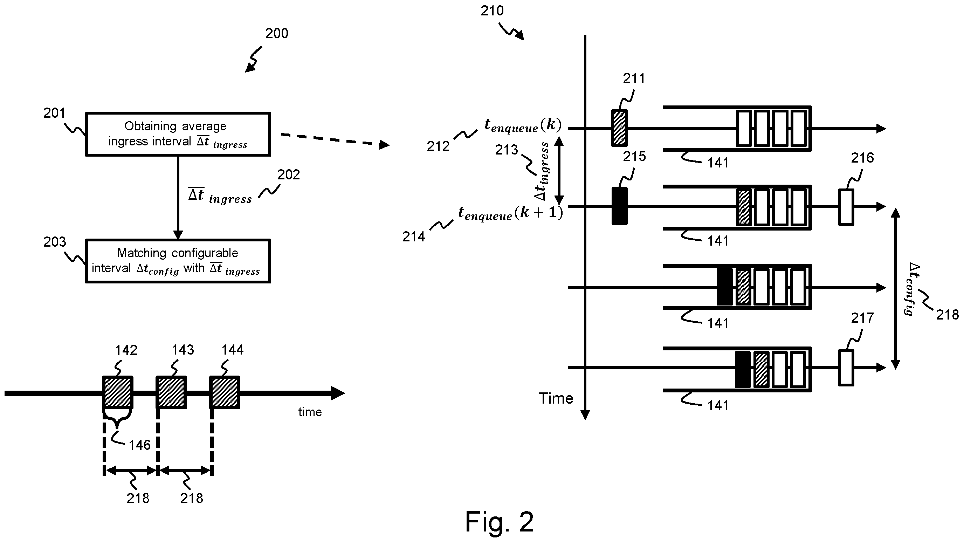

Fig. 2 shows steps 200 performed by means of a central network node configured to optimize the trade-off or balance between latency and bandwidth efficiency of traffic flows between a client network node and a central network node, according to an example embodiment.

Fig. 2 further shows an example time diagram 210 of data packets 211, 215 arriving at transmission queue 141, and data packets 216, 217 being transmitted to a central network node, i.e. leaving the transmission queue 141. The transmission queue 141 receives data packets 211, 215 from a connected service or application at a certain rate or frequency. A first packet 211 may arrive at the transmission queue 141 at timestep $t_{enqueue}(k)$ 212. A second packet 215 may arrive at the transmission queue 141 at timestep $t_{enqueue}(k + 1)$ 214. The amount of time $\Delta t_{ingress}$ 213 that elapses between the arrival or ingress of consecutive data packets 211, 215 at the transmission queue 141 is referred to as the ingress interval 213.

Data packets within the transmission queue 141 await their turn to be transmitted to the central network node during an allocated recurrent transmission opportunity 142, 143, 144. In other words, data packets 216, 217 may be dequeued from the transmission queue 141 when a recurrent transmission opportunity 142, 143, 144 associated with transmission queue 141 occurs. The amount of time $\Delta t_{config}$ 218 that elapses between consecutive recurrent transmission opportunities 142, 143, 144 is referred to as the configurable interval 218. It will be apparent that Fig. 2 illustrates an example wherein data packets 216, 217 are transmitted during consecutive transmission opportunities but that a recurrent transmission opportunity may occur without data being transmitted from the transmission queue 141, e.g. when the transmission queue is empty or when data packet 216 is the last data packet in the queue 141.

In a first step 201, the means of the central network node obtain an average ingress interval $\overline{\Delta t}_{ingress}$ 202 of packets 211, 215 arriving at the transmission queue 141. The average ingress interval $\overline{\Delta t}_{ingress}$ 202 is thus the average elapsed time between the arrival or ingress of consecutive data packets 211, 215 at the transmission queue. The average ingress interval $\overline{\Delta t}_{ingress}$ 202 may, for example, be determined by a moving average or an exponentially weighted average.

In a following step 203, the means of the central network node match the configurable interval 218 with the average ingress interval 202. The matching may be achieved by configuring the configurable interval 218 to be substantially equal to the obtained average ingress interval 202. Alternatively, the matching can be achieved by configuring the frequency of the recurrent transmission opportunities 142, 143, 144, which is inversely proportional to the configurable interval 218, to the average frequency of arriving packets at the transmission queue 141, which is inversely proportional to the average ingress interval 202. Alternatively, the matching can be achieved by configuring the configurable interval 218 based on other ingress traffic related measures indicative for the rate of arriving data packets at the transmission queue 141.

Matching the configurable interval 218 with the average ingress interval 202 results in an optimization of the trade-off between bandwidth efficiency and latency for the traffic flow between a transmission queue 141 and a central network node. In other words, configuring the average ingress interval 202 of a transmission queue 141 as the configurable interval 218 of the recurrent transmission opportunities 142, 143, 144 associated with that transmission queue 141 optimizes the trade-off or compromise between bandwidth efficiency and latency.

This allows active and adaptive tracking of an optimized configuration for the configurable interval 218 over time, as a larger configurable interval 218 is configured when the service associated with a transmission queue 141 does not require low latency, and a smaller configurable interval 218 is configured when the connected service requires low latency. In other words, this allows aligning the allocation of recurrent transmission opportunities 142, 143, 144 with the instantaneous latency requirement of the active traffic 211, 215, 216, 217 in a transmission queue 141.

This has the further advantage that the configurable interval 218 can be dynamically adapted to the current traffic between a client node and the central network node. This has the further advantage that an optimal balance between bandwidth efficiency and latency can be maintained when the services connected to a transmission queue 141 vary over time, e.g. when the desired latency and jitter vary substantially during the day. This has the further advantage that the quality of service can be optimized and maintained. It is a further advantage that an incorrect, sub-optimal, or conservative configuration of latency-related service parameters provisioned by an operator do not result in bandwidth inefficient operation or excessive latency.

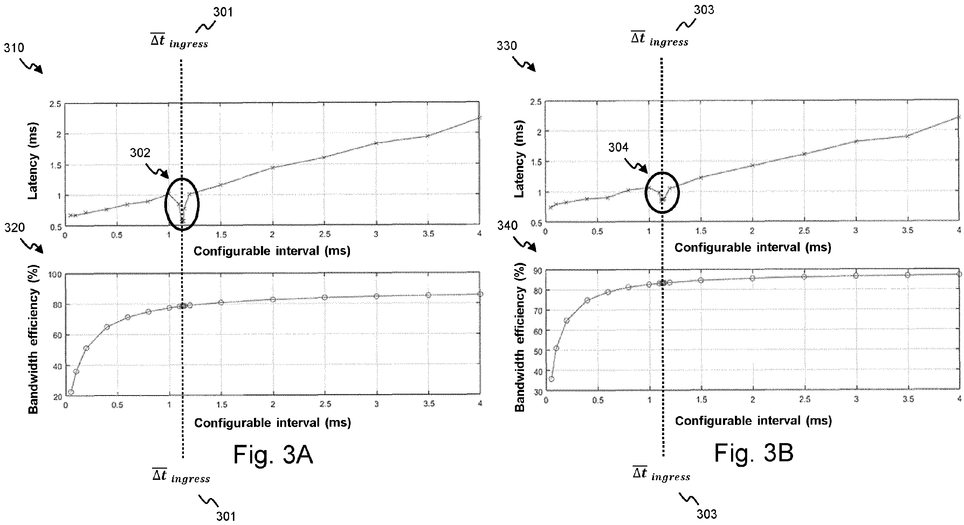

Fig. 3A shows validation results of the latency 310 and bandwidth efficiency 320 of a periodic traffic flow between a client node and a central network node for different configurable intervals. The average ingress interval 301 of packets arriving at the transmission queue associated with the periodic traffic flow is set to 1.136 ms. As generally expected, graph 310 shows that the latency decreases when the configurable interval decreases. However, surprisingly, an optimal point 302 or sweet spot for the latency is observed where the configurable interval matches the average ingress interval 301 of the transmission queue.

Graph 320 shows that bandwidth efficiency generally increases when the configurable interval increases, as less frequent data transmissions result in less overhead due to headers and preambles. Graph 320 further shows that at a configurable interval that matches the average ingress interval 301 the bandwidth efficiency is good at around 80%. Matching the configurable interval with the average ingress interval of 1.136 ms thus results in an optimal balance between bandwidth efficiency and latency, as a higher configurable interval substantially increases the latency without improving the bandwidth efficiency significantly, while a lower configurable interval substantially reduces the bandwidth efficiency without improving the latency.

Fig. 3B shows validation results of the latency 330 and bandwidth efficiency 340 of a modelled traffic flow between a client node and a central network node for different configurable intervals. The modelled traffic flow is generated by a traffic generation model, in particular a Poisson traffic model. The average ingress interval 303 of packets arriving at the transmission queue associated with the traffic flow is set to 1.136 ms. Similarly to the observations described above in relation to Fig. 3A, graphs 330 and 340 show that the trade-off between latency and bandwidth efficiency can be optimized by matching the configurable interval to the average ingress interval of the transmission queue.

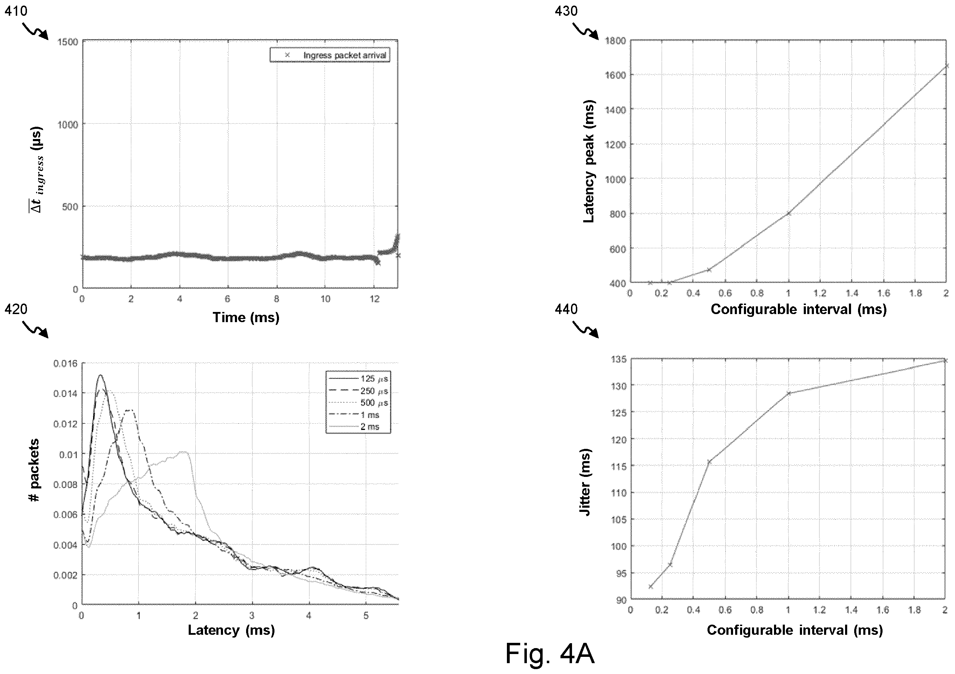

Fig. 4A shows experimental validation results of a torrent traffic flow. The traffic flow is a 100 Mbps bit torrent upstream traffic trace. Graph 410 shows the average ingress interval of data packets arriving at an associated transmission queue, which varies between about 200 $\mu$s and about 250 $\mu$s. Contrary to the validation results shown in Fig. 3A and Fig. 3B, the delay statistics or latency of the bit torrent upstream traffic changes in time. As such, graph 420 shows a histogram of the latency when the configurable interval is configured at different values, i.e. 125 $\mu$s, 250 $\mu$s, 500 $\mu$s, 1000 $\mu$s, and 2000 $\mu$s. For a more clear comparison between the different histograms, graph 430 shows the latency at the histogram peak for each configurable interval configuration, and graph 440 shows the jitter for each configurable interval configuration, i.e. 125 $\mu$s, 250 $\mu$s, 500 $\mu$s, 1000 $\mu$s, and 2000 $\mu$s. The validation results show that a configurable interval of 250 $\mu$s, which substantially matches the average ingress interval 410, achieves a minimum latency and has a small jitter. This shows that substantially matching the configurable interval to the average ingress interval results in an optimal configuration or sweet spot with optimal latency while being more bandwidth efficient than the minimum configurable interval configuration, i.e. 125 $\mu$s.

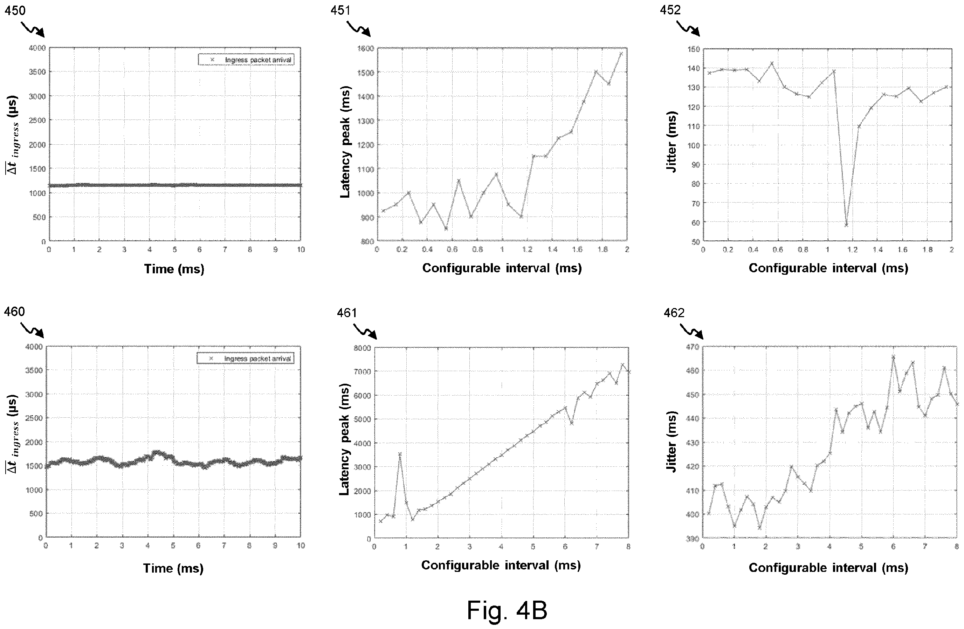

Fig. 4B shows experimental validation results 450, 451, 452 of a modelled traffic flow. The average ingress interval of packets arriving at the transmission queue associated with the modelled traffic flow is 1136 $\mu$s, as illustrated in graph 450. Similarly to the validation discussed in relation to Fig. 4A, the configurable interval for the modelled traffic flow is configured to different values between 125 $\mu$s and 2000 $\mu$s. The performance of the traffic flow at these different configurable interval values is summarized in respective histograms (not shown), i.e. similarly to graph 420 in Fig. 4A. Graph 451 shows the latency at the histogram peak for each configurable interval configuration, and graph 452 shows the jitter for each configurable interval configuration. Graphs 451 and 452 show that for a configurable interval that matches the average ingress interval, a good latency is achieved of about 1 ms and a good jitter is achieved of about 60 $\mu$s. For a larger configurable interval configuration the latency and jitter are substantially larger. For a smaller configurable interval configuration the latency and jitter do not improve while the bandwidth efficiency drastically reduces.

Fig. 4B further shows experimental validation results 460, 461, 462 of a traffic flow for a full HD video stream. The average ingress interval of packets arriving at the transmission queue associated with the HD video stream traffic flow is 1500 $\mu$s, as illustrated in graph 460. Similarly to the validation discussed in relation to Fig. 4A, the configurable interval for the HD video stream is configured to different values between 125 $\mu$s and 8000 $\mu$s. The performance of the HD video stream at these different configurable interval values is summarized in respective histograms (not shown), i.e. similarly to graph 420 in Fig. 4A. Graph 461 shows the latency at the histogram peak for each configurable interval configuration, and graph 462 shows the jitter for each configurable interval configuration. Again, matching the configurable interval to the average ingress interval, i.e. around 1500 $\mu$s, results in a good latency of around 800 $\mu$s, a good jitter of

around 395 μs, and is more bandwidth efficiency compared to the smallest configurable interval of around 125 μs.

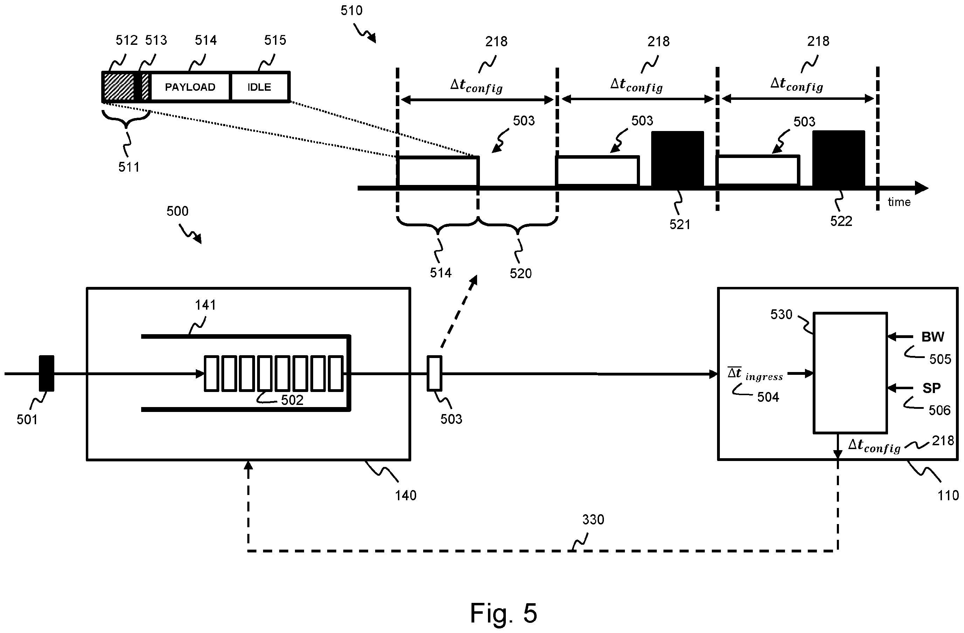

Fig. 5 shows an example embodiment 500 of a central network node 110 and a client network node 140 comprising a transmission queue 141. The transmission queue 141 is configured to receive data packets 501, e.g. from a connected service or application, and to transmit data packets 503 to the central network node 110 during recurrent transmission opportunities 514. The central network node comprises means 530 configured to perform obtaining the average ingress interval 504 of packets 501 arriving at the transmission queue 141, and matching the configurable interval 218 between the start of consecutive transmission opportunities with the average ingress interval 504.

Obtaining the average ingress interval 504 may comprise receiving the average ingress interval 504 from the transmission queue 141 or client network node 140. In other words, the average ingress interval 504 of packets 501 arriving at the transmission queue 141 may be determined by the client network node 140 that comprises the transmission queue 140. This can be achieved by tracking or measuring the time interval between the arrival of consecutive packets 501 at the transmission queue 141 and updating an average value of this time interval. Alternatively or complementary, the average ingress interval 504 can be determined by the client network node 140 based on other indicators of the active traffic within the transmission queue, and/or other indicators for the occupancy of the queue 141, e.g. queue size or queue fill. The average ingress interval determined by the client network node 140 may then be exchanged with the central network node 110.

The transmitted data 503 from the transmission queue 141 to the central network node 110 may comprise a header 511, a payload 514, and idle data 515. The average ingress interval 504 determined by the client network node 140 may be included in the header 511 of the transmitted data 503. In doing so, the means 530 of central network node 110 can obtain the average ingress interval 504. The average ingress interval 504 may, for example, be included in a dedicated frame 513, field, or bit of the header 511. Alternatively, the average ingress interval 504 may be included in a standardized frame for buffer status reporting such as, for example, an upstream dynamic bandwidth report, DBRu, structure in a passive optical network according to the ITU-T G.9807 standard. In this case, some of the 4 bytes in the DBRu structure may be replaced by one or more bits for reporting the average ingress interval 504.

Alternatively, obtaining the average ingress interval 504 may comprise determining the average ingress interval 504 based on the transmitted data 503. In other words, the means 530 of the central network node 110 may be configured to determine the average ingress interval 504 of packets 501 arriving at a transmission queue 141 within a client network node 140 based on the transmitted data 503 received from said transmission queue 141.

To this end, the transmitted data 503 may comprise a queue status indicative for an occupancy of the transmission queue 141 based upon which the average ingress interval 504 can be determined by the means 530 of the central network node 110. The queue status may, for example, be a queue fill, a queue size, a queue length, a queue backlog, or an amount of packets 502 within the transmission queue 141. The queue status may be included in a dedicated frame 513, field, or bit of the header 511. Alternatively, the queue status may be included in a standardized frame of the transmitted data 503 for buffer status reporting such as, for example, an upstream dynamic bandwidth report, DBRu, structure in a passive optical network according to the ITU-T G.9807 standard. In this case, some of the 4 bytes in the DBRu structure may be replaced by one or more bits for reporting the average ingress interval 504.

Alternatively or complementary, determining the average ingress interval 504 may be based on the idle data 515 transmitted within the recurrent transmission opportunities 514. The average ingress interval 504 may thus be determined by the means 530 of the central network node 110 based on the activity of the transmission queue 141 within the recurrent transmission opportunities as reflected by the idle data 515, i.e. based on how previously allocated recurrent transmission opportunities are used. For example, idle XGEM frames within an upstream recurrent transmission opportunity in a passive optical network can be used to determine the average ingress interval 504.

Matching the configurable interval 218 with the average ingress interval 504 may be achieved by updating the configurable interval 218 based on packets 501 arriving at the transmission queue 141 between consecutive transmission opportunities 514. In other words, the configurable interval 218 may be controlled to gradually converge to the average ingress interval 504 by means of a closed-loop control. This can be achieved based on a reported queue status 513, based on transmitted idle data 515, and/or based on the transmitted data 503 from the respective transmission queue. This updating thus provides a so-called online matching of the average ingress interval 504, as an update may be performed when data 503 is received from the transmission queue.

According to an example embodiment, such a closed-loop control can be achieved based on a reported queue status 513 indicative for an occupancy of the transmission queue 141, e.g. a reported queue fill included in the transmitted data 503. To this end, the average difference queue fill $\overline{\Delta Q_{fill}}$ may be determined as

$$\overline{\Delta Q}_{fill} = \alpha \, \overline{\Delta Q}_{fill} + (1 - \alpha)((Q_{fill,start}(k+1) - Q_{fill,end}(k)) > 0) \qquad \text{(Eq. 1)}$$

where $\alpha$ is a correction factor, e.g. $\alpha = 0.98$; $Q_{fill,start}(k+1)$ is the reported queue fill at the start of transmission opportunity

($k$ + 1); and $Q_{fill,end}(k)$ is the queue fill at the end of transmission opportunity k determined as

$$Q_{fill,end}(k) = Q_{fill,start}(k) - BW_{consumed}(k) \qquad (Eq.\ 2)$$

where $BW_{consumed}(k)$ is the consumed bandwidth during transmission opportunity *k*. The term ($Q_{fill,start}(k + 1)$ - $Q_{fill,end}(k)$) > 0 in Eq. 1 may equal 1 if $Q_{fill,start}(k + 1)$ is larger than $Q_{fill,end}(k)$, else it may equal 0.

By tracking this average difference queue fill $\overline{\Delta Q_{fill}}$ and controlling the configurable interval 218 such that the average difference queue fill $\overline{\Delta Q_{fill}}$ is around one, in particular just below one, the configurable interval 218 converges to the average ingress interval 504. The configurable interval 218 may be updated according to $\Delta t_{config} = \Delta t_{config}(1 + step(0.95 - \overline{\Delta Q_{fill}}))$. The updating may end when an end criterion is met, e.g. when $0.95 - \overline{\Delta Q_{fill}} = 0$. Updating the configurable interval 218 may further be performed by means of a multiplicative weight update algorithm; a least mean squares, LMS, algorithm; a proportional-integral-derivative, PID, control algorithm; or a machine learning algorithm.

Matching the configurable interval 218 with the average ingress interval 504 may further comprise converging the configurable interval 218 to the average ingress interval 504 starting from a lower limit of the configurable interval. For example, the closed-loop control described above may start from an initial value for the configurable interval 218 equal to a lower limit of the configurable interval. This lower limit may be the lowest allowable value of the configurable interval for the associated service or application, e.g. as provisioned by an operator or as defined in a technical standard specification such as ITU-T G.9807. This allows guaranteeing the latency quality of service while the configurable interval converges, in particular at startup of latency sensitive services.

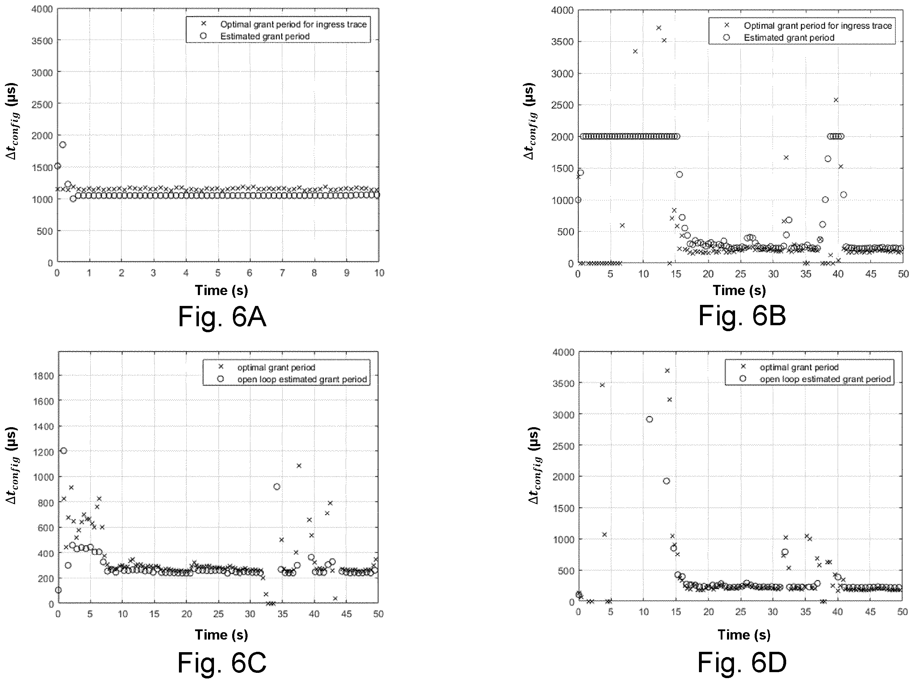

Fig. 6A shows a comparison of the configurable interval as determined by the aforementioned closed-loop control (illustrated by 'O'), and the optimal configurable interval (illustrated by 'X'), i.e. equal to the average ingress interval, for a modelled traffic flow between a client node and a central network node. The modelled traffic flow is generated by a traffic generation model, in particular a Poisson traffic model. The configurable interval converges relatively quickly and approximates the optimal configurable interval, i.e. the average ingress interval, relatively closely.

Fig. 6B shows a comparison of the configurable interval as determined by the aforementioned closed loop control (illustrated by 'O'), and the optimal configurable interval (illustrated by 'X'), i.e. equal to the average ingress interval, for a real traffic flow between a client node and a central network node. The traffic flow is a 100 Mbps bit torrent upstream traffic trace. During the first 15 seconds, traffic is low and thus the configurable interval is fixed at an upper limit, i.e. 2000 μs. This upper limit may be determined by one or more service parameters provisioned by an operator. After 15 seconds the bit torrent stream is fully activated and the optimal configurable interval of 250 μs is correctly approximated.

According to an example embodiment, the central network node may further be configured to receive a calibration data sequence from a transmission queue, e.g. a sequence of calibration bursts. The calibration data sequence may, for example, be achieved by transmitting data from the transmission queue to the central network node with a substantially small configurable interval during a relatively short calibration period. In other words, the interval between data bursts in the calibration data sequence may be substantially smaller than required for the traffic flow of connected services. The transmission queue or client network node may be prompted or requested to occasionally transmit the calibration data sequence to the central network node. This prompt or request may be performed periodically, at random intervals, at initialization, or when a threshold condition is reached.

The means of central network node may further be configured to perform determining the average ingress interval based on the respective calibration data, i.e. the data transmitted in the calibration data bursts. This thus provides a so-called offline matching or open-loop control of the average ingress interval 504, as a traffic flow associated with a service or application has to be interrupted or halted to perform the determining of the average ingress interval. This has the advantage that the average ingress interval can be determined more accurately, as smaller calibration bursts can be transmitted at shorter intervals compared to the transmitted data of a traffic flow. Alternatively, the traffic flow may temporarily be overprovisioned instead of interrupted or halted. In other words, the traffic flow associated with a service may temporarily be transmitted at a smaller configurable interval than required for the traffic flow. This may temporarily result in a lower bandwidth efficiency, but allows to determine the average ingress interval accurately without interrupting the traffic flow.

Fig. 6C shows a comparison of the configurable interval as determined by the aforementioned open-loop control (illustrated by 'O'), and the optimal configurable interval (illustrated by 'X'), i.e. equal to the average ingress interval, for the upload of a large file. The client network node is prompted to transmit a calibration data sequence with a configurable interval of 50 μs to determine the optimal configurable interval, i.e. the average ingress interval.

Fig. 6D shows a comparison of the configurable interval as determined by the aforementioned open loop control (illustrated by 'O'), and the optimal configurable interval (illustrated by 'X'), i.e. equal to the average ingress interval, for a real traffic flow between a client node and a central network node. The traffic flow is the same 100 Mbps bit torrent upstream traffic trace as in Fig. 6B. The client network node is prompted to transmit a calibration data sequence with a configurable interval of 50 μs to determine the optimal configurable interval, i.e. the average ingress interval.

Returning to Fig. 5, the means 530 of the central network node 110 may further be configured to perform determining the configurable length of the recurrent transmission opportunities 514 based on the configurable interval 218 and a data rate 505 or assigned bandwidth of the transmitted data 503 within the recurrent transmission opportunities.

The data rate 505 of the transmitted data 503 within the recurrent transmission opportunities 514 may be determined by a dynamic bandwidth assignment, DBA, algorithm performed by a DBA engine. Such a DBA engine may be included in the central network node 110. In other words, the means 530 of central network node 110 may receive the assigned bandwidth or data rate 505 from a DBA engine. Alternatively, the data rate 505 can be provisioned by an operator. The configurable length of the recurrent transmission opportunities 514 may thus be determined based on this assigned data rate 505 and the optimal configurable interval 218, i.e. the configurable interval 218 that substantially matches the average ingress interval 202. The means 530 may further receive one or more service parameters 506 or traffic descriptors, e.g. provisioned by an operator, that define constraints on the configurability of the configurable interval 218 and/or the configurable length 514, e.g. an upper limit or lower limit.

The means 530 may further be configured to perform determining periods of low power operation 521, 522 for the central network node 110 and/or for one or more client network nodes 140. These periods of low power operation 521, 522 may be determined based on the configurable interval 218 and the configurable length of the recurrent transmission opportunities 514, as this allows determining a period 520 between the end of a previous transmission opportunity and the start of a next transmission opportunity. As the transmission queue 141 is not allowed to transmit data during this period 520, at least a portion of the client network node 140 may operate in a low power mode during this period 520. It will be apparent that the portion of the client network node 140 that can operate in a low power mode depends on the amount of transmission queues 141 within the client network node 140 and their respective periods 520 between consecutive transmission opportunities.

The means 530 may further be configured to perform instructing the client network node 140 to switch one or more functionalities to a low power mode during these determined periods 521, 522 of low power operation. The client network node 140 can, for example, be instructed to switch one or more electrical transmitter circuitries and/or optical transmitter circuitries to a sleep mode during the period of standby operation. This allows reducing the energy consumption of the client network nodes, thereby improving the energy efficiency of the client network node. In doing so, matching the configurable interval 218 with the average ingress interval 504 can thus result in an optimization of the trade-off between energy efficiency and latency in addition to optimizing the trade-off between bandwidth efficiency and latency.

Alternatively or complementary, at least a portion of the central network node 110 may operate in a low power mode during a period free of transmission opportunities, i.e. when none of the client network nodes 140 are allowed to transmit data. To this end, the means may further be configured to switch one or more functionalities of the central network node to a low power mode during a determined period of low power operation for the central network node, e.g. by switching one or more electrical receiver circuitries and/or optical receiver circuitries in the central network node to a sleep mode.

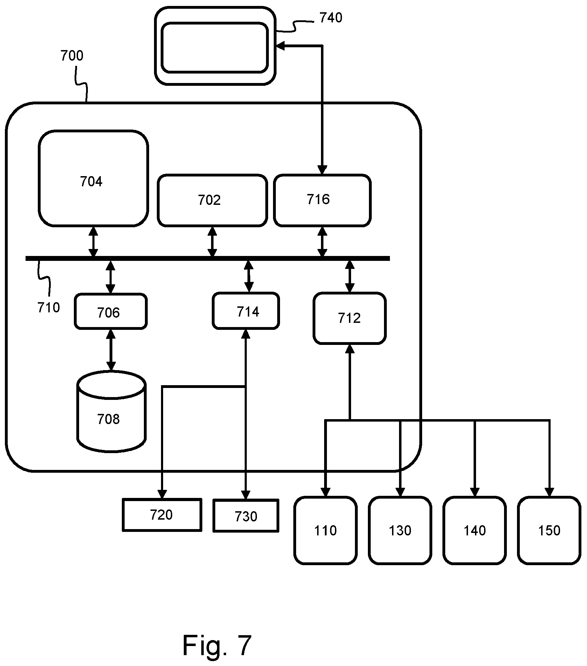

Fig. 7 shows a suitable computing system 700 enabling to implement embodiments of the method for optimizing the trade-off between latency and bandwidth efficiency of traffic flows. Computing system 700 may in general be formed as a suitable general-purpose computer and comprise a bus 710, a processor 702, a local memory 704, one or more optional input interfaces 714, one or more optional output interfaces 716, a communication interface 712, a storage element interface 706, and one or more storage elements 708. Bus 710 may comprise one or more conductors that permit communication among the components of the computing system 700. Processor 702 may include any type of conventional processor or microprocessor that interprets and executes programming instructions. Local memory 704 may include a random-access memory (RAM) or another type of dynamic storage device that stores information and instructions for execution by processor 702 and/or a read only memory (ROM) or another type of static storage device that stores static information and instructions for use by processor 702. Input interface 714 may comprise one or more conventional mechanisms that permit an operator or user to input information to the computing device 700, such as a keyboard 720, a mouse 730, a pen, voice recognition and/or biometric mechanisms, a camera, etc. Output interface 716 may comprise one or more conventional mechanisms that output information to the operator or user, such as a display 740, etc. Communication interface 712 may comprise any transceiver-like mechanism such as for example one or more Ethernet interfaces that enables computing system 700 to communicate with other devices and/or systems, for example with a central network node 110, and one or more client network nodes 130, 140, 150. The communication interface 712 of computing system 700 may be connected to such a source node or destination node by means of a local area network (LAN) or a wide area network (WAN) such as for example the internet. Storage element interface 706 may comprise a storage interface such as for example a Serial Advanced Technology Attachment (SATA) interface or a Small Computer System Interface (SCSI) for connecting bus 710 to one or more storage elements 708, such as one or more local disks, for example SATA disk drives, and control the reading and writing of data to and/or from these storage elements 708. Although the storage element(s) 608 above is/are described as a local disk, in general any other suitable computer-readable media such as a removable magnetic disk, optical storage media such as a CD or DVD, ROM, disk, solid state drives, flash memory cards, etc. could be used. Computing system 700 could thus correspond to the means 530 of central network node 110 as illustrated in Fig. 5.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

As used in this application, the term "circuitry" may refer to one or more or all of the following: (a) hardware-only circuit implementations (such as implementations in only analogue and/or digital circuitry and/or optical circuitry) and (b) combinations of hardware circuits and software, such as (as applicable): (i) a combination of analogue and/or digital hardware circuit(s) with software/firmware and (ii) any portions of hardware processor(s) with software (including digital signal processor(s)), software, and memory(ies) that work together to cause an apparatus to perform various functions) and (c) hardware circuit(s) and or processor(s), such as a microprocessor(s) or a portion of a microprocessor(s), that requires software (e.g., firmware) for operation, but the software may not be present when it is not needed for operation. This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware.

## Claims

1. A central network node (110) configured to communicate in a point-to-multipoint network (100) with client network nodes (130, 140, 150); wherein the client network nodes respectively comprise one or more transmission queues (131, 132, 141, 151, 152, 153); wherein a respective transmission queue (141) has a recurrent transmission opportunity (142, 143, 144) for transmitting data (216, 217) from the respective transmission queue to the central network node; and wherein the recurrent transmission opportunity has a configurable interval (145, 218) and a configurable length (146); the central network node comprising means configured to perform, for the respective transmission queues:

   - obtaining (201) an average ingress interval (202) of packets (211, 215) arriving at the transmission queue; and
   - matching (203) the configurable interval (218) with the average ingress interval.

2. The central network node according to claim 1, wherein the central network node (110) is an optical line terminal, OLT, configured to communicate in a point-to-multipoint passive optical network (100) with optical network units (130, 140, 150), ONUs.

3. The central network node according to any of the preceding claims, wherein the means are further configured to perform, for the respective transmission queues, determining the configurable length (314) of the recurrent transmission opportunities based on the configurable interval and a data rate (505) of the transmitted data within the recurrent transmission opportunities.

4. The central network node according to any of the preceding claims, wherein the means are further configured to perform, for the respective transmission queues (131, 132, 141, 151, 152, 153), determining periods of low power operation (521, 522) for the central network node and/or the client network node (130, 140, 150) associated with a respective transmission queue, based on the configurable interval (218) and the configurable length (514) of the recurrent transmission opportunities.

5. The central network node according to any of the preceding claims, wherein obtaining (201) the average ingress interval comprises receiving the average ingress interval (504) from a respective transmission queue (141) or client network node (140).

6. The central network node according to claim 5, wherein the average ingress interval (504) is included in a header (511) of the transmitted data (503) from the respective transmission queue (141) to the central network node (110).

7. The central network node according to any of claims 1 - 4, wherein obtaining (201) the average ingress interval comprises determining the average ingress interval based on the transmitted data (503) from a respective transmission queue to the central network node.

8. The central network node according to claim 7, wherein the transmitted data (503) comprises a queue status indicative for an occupancy of the respective transmission queue (141); and wherein determining the average ingress interval is based on the queue status.

9. The central network node according to claim 7, wherein determining the average ingress interval (504) is based on idle data (515) transmitted within the recurrent transmission opportunities.

10. The central network node according to claim 7 wherein matching (203) the configurable interval with the average ingress interval comprises updating the configurable interval (218) based on packets arriving at the transmission queue between consecutive transmission opportunities.

11. The central network node according to claim 10, wherein updating the configurable interval is performed by means of a multiplicative weight update algorithm; a least mean squares, LMS, algorithm; a proportional-integral-derivative, PID, control algorithm; or a machine learning algorithm.

12. The central network node according to claim 7, further configured to receive a calibration data sequence from a respective transmission queue; and wherein the means are further configured to perform determining the average ingress interval (504) based on the respective calibration data.

13. The central network node according to claim 7, wherein matching (203) the configurable interval with the average ingress interval comprises converging the configurable interval to the average ingress interval starting from a lower limit of the configurable interval.

14. A client network node configured to communicate in a point-to-multipoint network with a central network node according to claim 5 or 6; wherein the client network node comprises one or more transmission queues; wherein a respective transmission queue has a recurrent transmission opportunity for transmitting data from the respective transmission queue to the central network node; and wherein the recurrent transmission opportunity has a configurable interval and a configurable length; the client network node comprising means configured to perform, for the respective transmission queues:

   - determining an average ingress interval of packets arriving at the transmission queue; and
   - providing the average ingress interval to the central network node.

15. A method comprising:

   - obtaining, by a central network node, an average ingress interval of packets arriving at a transmission queue included in a client network node; wherein the central network node is configured to communicate in a point-to-multipoint network with client network nodes; wherein the client network nodes respectively comprise one or more transmission queues; wherein a respective transmission queue has a recurrent transmission opportunity for transmitting data from the respective transmission queue to the central network node; and wherein the recurrent transmission opportunity has a configurable interval and a configurable length; and
   - matching the configurable interval with the average ingress interval.

Fig. 1

Fig. 2

301

$\overline{\Delta t}_{ingress}$

310

302

2.5

2

1.5

1

0.5

Latency (ms)

0    0.5    1    1.5    2    2.5    3    3.5    4
Configurable interval (ms)

320

100

80

60

40

20

Bandwidth efficiency (%)

0    0.5    1    1.5    2    2.5    3    3.5    4
Configurable interval (ms)

Fig. 3A

$\overline{\Delta t}_{ingress}$

301

303

$\overline{\Delta t}_{ingress}$

330

304

2.5

2

1.5

1

0.5

Latency (ms)

0    0.5    1    1.5    2    2.5    3    3.5    4
Configurable interval (ms)

340

90

80

70

60

50

40

30

Bandwidth efficiency (%)

0    0.5    1    1.5    2    2.5    3    3.5    4
Configurable interval (ms)

Fig. 3B

$\overline{\Delta t}_{ingress}$

303

16

Fig. 4A

Fig. 4B

Fig. 5

Fig. 6A

Fig. 6B

Fig. 6C

Fig. 6D

Fig. 7

Europäisches
Patentamt

European
Patent Office

Office européen
des brevets

# EUROPEAN SEARCH REPORT

Application Number

EP 23 17 0802

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 016 967 A1 (NOKIA SOLUTIONS & NETWORKS OY [FI]) 22 June 2022 (2022-06-22) * paragraph [0061] – paragraph [0068] * * paragraph [0089] * * paragraph [0098] – paragraph [0102] * * paragraph [0087] * * paragraph [0034] * * figures 2,3,7A-7C * ————— | 1-15 | INV. H04L45/16 H04L47/56 |

TECHNICAL FIELDS
SEARCHED (IPC)

H04L

The present search report has been drawn up for all claims

| Place of search | Date of completion of the search | Examiner |
|---|---|---|
| The Hague | 4 October 2023 | Perrier, Samuel |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
.............................................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 17 0802

This annex lists the patent family members relating to the patent documents cited in the above-mentioned European search report.
The members are as contained in the European Patent Office EDP file on
The European Patent Office is in no way liable for these particulars which are merely given for the purpose of information.

04-10-2023

| Patent document cited in search report | | Publication date | Patent family member(s) | | Publication date |
|---|---|---|---|---|---|
| EP 4016967 | A1 | 22-06-2022 | EP 4016967 | A1 | 22-06-2022 |
| | | | JP 2022096654 | A | 29-06-2022 |
| | | | US 2022200932 | A1 | 23-06-2022 |